Europäisches Patentamt

European Patent Office

Office européen des brevets

(19)

(11) **EP 0 931 266 B1**

(12) **EUROPÄISCHE PATENTSCHRIFT**

(45) Veröffentlichungstag und Bekanntmachung des Hinweises auf die Patenterteilung:
**16.11.2005 Patentblatt 2005/46**

(21) Anmeldenummer: **97944795.0**

(22) Anmeldetag: **26.08.1997**

(51) Int Cl.⁷: **G01P 15/16**

(86) Internationale Anmeldenummer:
**PCT/EP1997/004650**

(87) Internationale Veröffentlichungsnummer:
**WO 1998/016838 (23.04.1998 Gazette 1998/16)**

(54) **VERFAHREN ZUR BESTIMMUNG EINER FAHRZEUGVERZÖGERUNG ODER -BESCHLEUNIGUNG**

METHOD FOR REGISTERING A VEHICLE DECELERATION OR ACCELERATION

METHODE DE DETERMINATION D'UNE DECELERATION OU D'UNE ACCELERATION DE VEHICULE

(84) Benannte Vertragsstaaten:
**DE FR GB**

(30) Priorität: **12.10.1996 DE 19642122**

(43) Veröffentlichungstag der Anmeldung:
**28.07.1999 Patentblatt 1999/30**

(73) Patentinhaber: **Continental Teves AG & Co. oHG 60488 Frankfurt (DE)**

(72) Erfinder:
• **WOYWOD, Jürgen D-64542 Mörfelden (DE)**
• **LEHMER, Ronald D-61449 Steinbach (DE)**
• **DORNSEIFF, Manfred D-88046 Friedrichshafen (DE)**

(74) Vertreter: **Brand, Markus et al c/o Continental Teves AG & Co. oHG, Guerickestrasse 7 60488 Frankfurt am Main (DE)**

(56) Entgegenhaltungen:
**DE-A- 2 255 241    DE-A- 4 016 661 US-A- 4 193 642**

EP 0 931 266 B1

**Beschreibung**

Die vorliegende Erfindung betrifft ein Verfahren zur Bestimmung einer Fahrzeugverzögerung oder -bechleunigung gemäß dem Oberbegriff des Anspruchs 1.

Zur Bestimmung einer Fahrzeugverzögerung oder -beschleunigung ist es bekannt, Beschleunigungssensoren zu verwenden, welche einen Trägheitskörper aufweisen der bei auftretender Beschleunigung oder Verzögerung aus einer Ruhelage ausgelenkt wird.

Aufgabe der vorliegenden Erfindung ist es, eine Fahrzeugverzögerung oder -beschleunigung zu jedem Zeitpunkt und in allen Fahrsituationen ohne Zusatzsensoren allein anhand von Radsensorsignalen zu bestimmen.

Diese Aufgabe wird gelöst in Verbindung mit den kennzeichnenden Merkmalen des Anspruchs 1. Damit anhand von Radsensorsignalen eine vorliegende Fahrzeugverzögerung oder -beschleunigung zuverlässig ermittelt werden kann, müssen an die heranzuziehenden Radsensorsignale bestimmte Anforderungen gestellt werden. Hierzu gehört, daß das Rad oder die Räder, deren Umfangsgeschwindigkeit zur Grundlage der Ermittlung einer Fahrzeugverzögerung oder -beschleunigung gemacht wird, nicht allzu sehr von der Fahrzeuggeschwindigkeit abweichen. Sie dürfen keine überhöhten Beschleunigungs- oder Verzögerungswerte aufweisen und müssen in ausreichendem Kraftschluß mit der Fahrbahn stehen.

Eine Filterung der erhaltenen Verzögerungs- oder Beschleunigungswerte glättet unplausible Spitzenwerte.

Ein Indiz dafür, daß ein Fahrzeugrad sich bezüglich seiner Geschwindigkeit annähernd wie das Gesamtfahrzeug verhält, ist es, daß sich dieses Rad in keiner Bremsdruckregelung befindet, also keinen übermäßigen Schlupf aufweist. Wenn allerdings alle Räder einer Schlupfregelung oder anderweitigen Bremsdruckregelung unterzogen sind, so können hilfsweise solche Räder ausgewählt werden, die nach einer Schlupfregelung sich wieder in einer Druckaufbauphase befinden. Eine solche Druckaufbauphase deutet darauf hin, daß das betroffene Rad nicht mehr zum Blokkieren neigt und offensichtlich einen ausreichenden Haftschluß aufweist.

Während einer Bremsung mit Bremsschlupfregelung, bei welcher alle Räder eine Schlupfregelung durchlaufen, kann zusätzlich parallel zur zuvor beschriebenen Berechnungsart einer Fahrzeugverzögerung oder -beschleunigung eine zweite Berechnungsart, die aufgrund der ablaufenden Bremsung immer nur für Verzögerung gilt, durchgeführt werden. Hierzu wird ein einzelnes Rad ausgewählt, welches eine bestimmte Verzögerungsschwelle überschreitet. Es werden Wertepaare aus Zeitpunkt und momentaner Einzelradgeschwindigkeit gebildet, wobei jeweils aus zwei solchen Wertepaaren ein Geschwindigkeitsgradient errechnet wird. Die Wertepaare können dabei durchaus von verschiedenen Rädern stammen.

Der erste ermittelte Wert der Fahrzeugverzögerung oder -beschleunigung kann aus einer Mittelwertbildung der aus der ersten Berechnungsart ermittelten Fahrzeugverzögerung oder -beschleunigung und dem Gradienten hervorgehen.

Im weiteren Verlauf der Durchführung der zweiten Berechnungsart kann eine zeitliche Filterung mit den zuvor auf diese Art berechneten Fahrzeugverzögerungs- oder -beschleunigungswerten durchgeführt werden, so daß die Mittelwertbildung mit dem Wert der ersten Berechnungsart entfallen kann.

Dabei werden zur Gradientenbildung vorzugsweise solche Zeitpunkte bestimmt, an denen der aktuelle Gradient ein Extremum aufweist. Hierdurch ergibt sich quasi eine geglättete Geschwindigkeitskurve, durch welche die Fahrzeugverzögerung keine unplausiblen Sprünge macht. Solche Sprünge treten in der Regel nur bei den Einzelradgeschwindigkeiten auf, da diese während einer Schlupfregelung unterschiedliche Phasen durchlaufen. Für die Fahrzeugverzögerung hat das allerdings wenig Aussagewert.

Aus dem gleichen Grunde empfiehlt es sich, die Zeitpunkte zur Wertepaarbildung nicht zu dicht aneinanderzulegen, da die Einzelradgeschwindigkeiten unter Umständen starke zeitliche Abweichungen aufweisen. Ein Mindestabstand zwischen den gewählten Zeitpunkten glättet also ebenfalls die Kurve der Fahrzeugverzögerung.

Wenn für die zuvor genannten Berechnungsarten keines der Räder die Kriterien erfüllt, nach denen es ausgewählt werden könnte, so kann der zuletzt ermittelte Wert der Fahrzeugverzögerung zunächst beibehalten werden, bis ein neuer Wert ermittelbar ist.

Auf diese Weise wird zu jedem Zeitpunkt sichergestellt, daß ein berechneter Wert für die Fahrzeugverzögerung oder -beschleunigung vorliegt, der der Realität sehr nahe kommt.

Hierdurch bietet sich eine Reihe von Vorteilen. Beispielsweise ist bei Kenntnis der vorliegenden Fahrzeugverzögerung bzw. -beschleunigung eine stufenlose und permanente Abschätzung des Fahrbahnreibwertes während einer Bremsdruckregelung, einer Antriebsschlupfregelung oder auch einer Giermomentenregelung zur Verbesserung der Regelgüte möglich. Die jeweilige Regelung kann sich durch Auswahl jeweils passender Algorithmen besser auf die aktuelle Fahrsituation einstellen. Bremsdruckauf- und -abbau können dem aktuellen Reibwert besser angepaßt werden, welcher leichter zu ermitteln ist. Besondere Fahrbahnzustände, beispielsweise unterschiedliche Reibwerte an der linken und rechten Fahrzeugseite oder Reibwertsprünge können schneller erkannt werden. Auch der Schlupf der einzelnen Räder kann besser berechnet werden. Die ermittelte Fahrzeugverzögerung kann auch als Grundlage zur alternativen Ermittlung einer Fahrzeugreferenzgeschwindigkeit herangezogen werden.

Eine nähere Erläuterung des Erfindungsgedankens erfolgt nun anhand der Beschreibung eines Ausführungsbeispiels zur Ermittlung der Fahrzeugverzögerung während einer Bremsschlupfregelung.

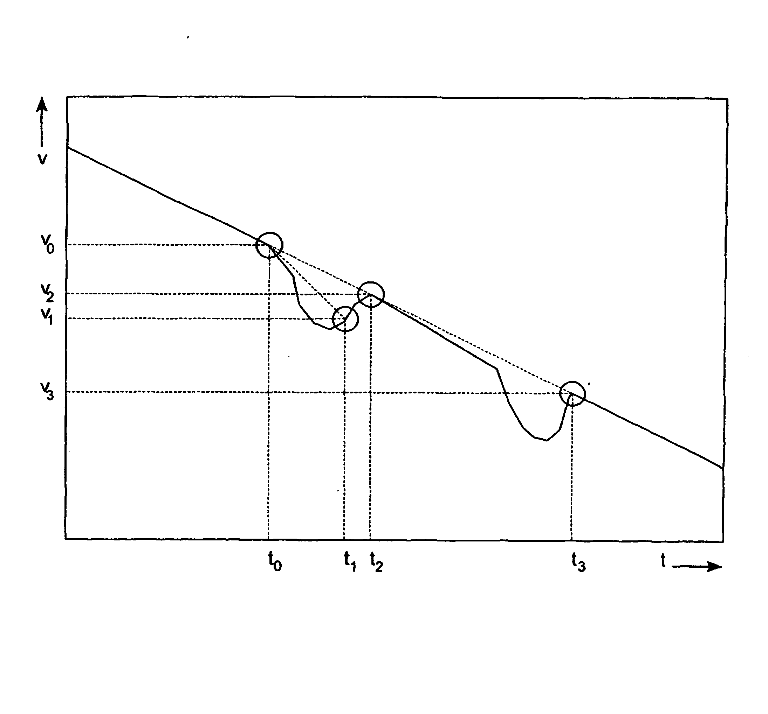

Die einzige Figur hierzu zeigt eine grafische Darstellung zum Prinzip der Gradientenbildung bei der Durchführung der zweiten Berechnungsart der Fahrzeugverzögerung.

Es sei angemerkt, daß es sich insbesondere bei den angegebenen zahlenwerten um Beispiele handelt, die plausible Größenordnungen wiedergeben sollen.

Gerät während einer pedalbetätigten Bremsung ein Fahrzeugrad in überhöhten Bremsschlupf, so greift ein Antiblockiersystem ein, um den Bremsschlupf abzusenken. Von einer solchen Bremsschlupfregelung müssen nicht alle Räder gleichzeitig betroffen sein.

Zur Durchführung einer ersten Berechnungsart einer Fahrzeugverzögerung $a_{filt}$ werden solche innerhalb des Antiblockiersystems berechnete gefilterte Einzelradverzögerungen $a_{Radfilt}$ addiert, deren zugehörige Räder die folgenden Bedingungen erfüllen:

1. Das Rad weist keine überhöhten Einzelradgeschwindigkeit auf, d.h. es handelt sich nicht um ein überdrehendes Rad. Erkannt wird ein überdrehendes Rad durch eine Abweichung von der Fahrzeug-Referenzgeschwindigkeit.
2. Das Rad befindet sich nicht in einer Bremsschlupfregelung.
3. Das Rad befindet sich nicht in einer Antriebsschlupfregelung.
4. Die gefilterte Einzelradverzögerung genügt der Ungleichung

$$1{,}5\,g > a_{Radfilt} > -2{,}5\,g$$

Die Summe der gefilterten Einzelradverzögerungen wird durch die Zahl der ausgewählten Räder dividiert und einer Tiefpaßfilterung unterzogen, beispielsweise gemäß der Formel:

$$a_{filt\,n} = \frac{29 \cdot a_{filt\,n-1} + \dfrac{\sum\limits_{i=1}^{m} a_{Rad\,filt\,i}}{m}}{30}$$

Hierbei steht m für die Zahl der ausgewählten Räder. Die zeitliche Ableitung von $a_{filt}$ wird begrenzt auf höchstens ±6,6 g/s, da ein Ruck größeren Betrags unrealistisch ist.

Wenn allerdings kein Rad die vorgenannten Bedingungen erfüllt, werden hilfsweise andere Bedingungen aufgestellt. Dann werden solche Räder ausgewählt, die folgende Bedingung erfüllen:

Das Rad befindet sich während einer Bremsschlupfregelung in einer Druckaufbauphase.

Eine Einzelradverzögerung, die der Bedingung

$$a_{fzg} - 1{,}1g < a_{Rad} < a_{fzg} + 1{,}1\,g$$

nicht genügt, wird bei Überschreitung einer dieser Grenzen auf den entsprechenden Grenzwert gesetzt.

In diesem Falle der hilfsweisen Auswahl von Rädern werden nicht die gefilterten Einzelradverzögerungen, sondern die ungefilterten Einzelradverzögerungen verwendet.

$$a_{filt\,n} = \frac{29 \cdot a_{filt\,n-1} + \dfrac{\sum\limits_{i=1}^{m} a_{Rad\,i}}{m}}{30}$$

Wenn eine Bremsschlupfregelung beendet wird, wird vorzugsweise die Filterkonstante k von 30 auf 10 herabgesetzt. Diese verringerte Filterkonstante gilt nur für eine begrenzte Zahl von Rechenschleifen, beispielsweise 30, und berücksichtigt die extrem hohe Dynamik der Fahrzeugverzögerung, die beim Austritt aus einer Bremsschlupfregelung auftreten kann:

$$a_{filt\,n} = \frac{9 * a_{filt\,n-1} + \dfrac{\sum\limits_{i=1}^{m} a_{Rad\,filt\,i}}{m}}{10}$$

Nun kann es vorkommen, daß weder die ursprünglichen Bedingungen zur Auswahl eines Rades von mindestens einem Rad erfüllt werden. Dann ist eine aktuelle Ermittlung der gefilterten Fahrzeugverzögerung $a_{filt}$ nicht möglich. In solchen Fällen wird der zuletzt ermittelte Werte von $a_{filt}$ beibehalten.

Wenn alle Räder des Fahrzeugs sich gerade in einer Bremsschlupfregelung befinden oder zumindest die Vorderräder des Fahrzeugs, so wird parallel zur ersten Berechnungsart eine zweite Berechnungsart zur Ermittlung der Fahrzeugverzögerung durchgeführt. Diese zweite Berechnungsart basiert auf einer Gradientenbildung, welche innerhalb einer Bremsschlupfregelung aus jeweils zwei Wertepaaren in bestimmten Zeitabständen eine Verzögerung errechnet. Jedes Wertepaar besteht aus einer Einzelradumfangsgeschwindigkeit eines nicht angetriebenen Rades und dem zugehörigen Zeitpunkt, wobei die Wertepaare auch von unterschiedlichen Rädern stammem können. Diese auf die zweite Berechnungsart ermittelte Fahrzeugverzögerung $a_{grad}$ bildet allerdings nur dann den Wert der abgeschätzten Fahrzeugverzögerung $a_{fzg}$, wenn tatsächlich alle Räder oder zumindest die Vorderräder und ein Hinterrad in einer Bremsschlupfregelung sind. Eine hilfsweise Bedingung gibt es für diese zweite Berechnungsart im vorliegenden Ausführungsbeispiel nicht. Werden die Bedingungen nicht erfüllt, so wird immer die erste Berechnungsart durchgeführt.

Eine der notwendigen Bedingungen zur Durchführung der zweiten Berechnungsart ist es, daß mindestens ein Rad einen gefilterten Verzögerungswert $a_{Radfilt}$ aufweist, der kleiner ist als -0,5 g, wobei eine Fahrzeugbeschleunigung positiv gezählt wird. Erzielt also ein Fahrzeugrad diese Verzögerung, so wird ein erstes Wertepaar gebildet, beispielsweise zum Zeitpunkt $t_0$ in der Figur. Das erste Wertepaar ist also $(t_0, v_0)$. Eine derartige Einzelradverzögerung ist ein Indiz dafür, daß voraussichtlich eine Bremsschlupfregelung erfolgen wird. Aber nur dann, wenn sechs Rechenschleifen später, also etwa 42 ms später die gefilterte Einzelradverzögerung eines Rades mindestens bei -1g liegt, wird die zweite Berechnungsart fortgeführt. Andernfalls wird das erste Wertepaar verworfen, und das Verfahren beginnt von neuem, da offensichtlich eine Fehlmessung vorlag und keine Bremsschlupfregelung eingesetzt hat.

Von dem Zeitpunkt an, zu welchem die momentane Beschleunigung eines Vorderrades 1g überschreitet, wird in jeder Rechenschleife ein Gradient nach der Formel gebildet:

$$grad_{akt} = \frac{v_0 - v_i}{t_0 - t_i}$$

Wird ein derart berechneter Gradient maximal und in mindestens 10 Rechenschleifen nicht überschritten, ist weiterhin die Differenz aus dem momentanen und dem maximalen Gradienten kleiner als -0,45 g, dann wird das Wertepaar, welches dem maximalen Gradienten zugeordnet ist, als weiteres Wertepaar akzeptiert, so daß sich ein erster Wert $a_{grad}$ für die Fahrzeugverzögerung aus dem Gradienten berechnen läßt:

$$a_{grad\,1} = \frac{a_{filt} + grad_{max}}{2}$$

Zwischen dem ersten und dem zweiten Wertepaar soll eine Zeitspanne liegen, die dem Schlupfeinlauf eines Rades entspricht. Das heißt, daß das Rad zunächst seinen maximalen Schlupf erreichen sollte, bis ein weiteres Wertepaar herangezogen wird. Dies ist erfahrungsgemäß nach etwa 200 ms der Fall, was im vorliegenden Beispiel etwa 29 Rechenschleifen entspricht. Auch zwischen allen weiteren Wertepaaren, sollte eine solche Zeitspanne liegen. Dabei sollten die zur Wertepaarbildung herangezogenen Räder folgende Bedingungen erfüllen:

1. Das Rad ist nicht angetrieben.

2. Das Rad weist keine überhöhte Einzelradgeschwindigkeit auf.

3. Das Rad befindet sich nicht in einer Antriebsschlupfregelung. Eine Antriebsschlupfregelung kann nämlich auch bei nicht angetriebenen Rädern eingreifen, wenn diese sich aufgrund von schlechten Fahrbehnzuständen gegenüber den anderen Fahrzeugrädern zu schnell drehen.

Der jeweils ermittelte Gradient wird auf "vernünftige" Werte begrenzt:

$$0 > grad_{akt} > -1{,}28g$$

Werte jenseits eines Grenzwertes werden gleich dem Grenzwert gesetzt.

Diese zweite Berechnungsart ist anhand der Figur veranschaulicht. Dargestellt ist die Einzelradgeschwindigkeit hier mit v bezeichnet, über der Zeit t. Solange das Rad eine Verzögerung aufweist, die -0,5g nicht unterschreitet, wird kein Wertepaar ermittelt. Erst zum Zeitpunkt $t_0$, an dem die Verzögerung des Rades -0,5g unterschreitet, wird ein erstes Wertepaar aus $t_0$ und $v_0$ gebildet. Da im weiteren Verlauf innerhalb von 6 Rechenschleifen entsprechend etwa 42 ms von einem Rad die Schwelle von -1g unterschritten wird, wird das zuerst gewählte Wertepaar beibehalten. An einer Stelle $t_1$, an welchem ein Rad auf über 1g beschleunigt, wird zunächst ein zweites Wertepaar ermittelt und ein Gradient nach der Formel berechnet:

$$grad_{akt} = \frac{v_0 - v_1}{t_0 - t_1}$$

Da der hier berechnete Gradient, markiert durch die gestrichelte Linie zwischen den beiden Wertepaaren ($t_0$, $v_0$) und ($t_1$, $v_1$), jedoch nicht maximal ist, wird von nun an - nicht dargestellt - in jeder Rechenschleife ein Gradient gebildet, bis dieser für 10 Rechenschleifen maximal ist. Dies ist zum Zeitpunkt $t_2$ der Fall. Damit bilden $t_2$ und $v_2$ das zweite Wertepaar. Es gilt also

$$grad_{max} = \frac{v_0 - v_2}{t_0 - t_2}$$

Anhand des auf diese Weise ermittelten maximalen Gradienten wird nun zum ersten Mal die Fahrzeugverzögerung $a_{grad}$ errechnet, und zwar nach der Formel

$$a_{grad\ 1} = \frac{a_{filt} + grad_{max}}{2}$$

Dies ist also eine Mittelwertbildung zwischen der nach der ersten Berechnungsmethode ermittelten Fahrzeugverzögerung und dem maximalen Gradienten. Im weiteren Verlauf allerdings wird nicht mehr die nach der ersten Berechnungsart ermittelte Fahrzeugverzögerung zur weiteren Berechnung herangezogen, sondern die nach der zweiten Berechnungsart. Dabei wird eine Filterkonstante von k = 3 eingeführt:

$$a_{grad\ n} = \frac{2 * a_{grad\ n-1} + grad_{max}}{3}$$

Gemäß der Fig. ist an der Stelle $t_3$ ein weiteres Maximum des Gradienten gefunden. Die Fahrzeugverzögerung $a_{grad}$ wird anhand des Wertepaares aus $t_3$ und $v_3$ gemäß der oben angegebenen Formel mit dem Gradienten

$$grad_{max} = \frac{v_2 - v_3}{t_2 - t_3}$$

errechnet.

In der Fig. ist gut zu erkennen, daß trotz starker Abweichung der Einzelradgeschwindigkeit von der tatsächlichen Fahrzeuggeschwindigkeit durch die Wahl des maximalen Gradienten während einer Bremsschlupfregelung dennoch eine der wirklichen Fahrzeugverzögerung entsprechende Information auch aus einer solchen Einzelradverzögerung zu gewinnen ist, da die Auswahl der maximalen Gradienten die Geschwindigkeitskurve glätten. Bei einer Bremsschlupfregelung hat ein Rad dann annähernd die Fahrzeuggeschwindigkeit, wenn es mit dem geringsten Schlupf läuft. Das heißt bei einer Bremsung, wenn es ein Geschwindigkeitsmaximum aufweist. Dies macht sich die vorliegende Erfindung zunutze.

Wie dargelegt wurde, ist es also möglich, in nahezu jeder Fahrsituation einen hochaktuellen Wert für die Fahrzeugverzögerung zu ermitteln. Sollte dies einmal nicht möglich sein, so kann ein alter Wert übernommen werden, der aber durch die kurze Dauer der Rechenschleifen nur kleine Bruchteile von Sekunden alt ist. Dabei wird die Fahrzeugverzögerung oder -beschleunigung nur dann dem nach der zweiten Berechnungsart ermittelten Verzögerungswert $a_{grad}$ gleichgesetzt, wenn sich tatsächlich alle Räder in einer Bremsschlupfregelung befinden und die Anfangsverzögerungsbedingungen für diese zweite Berechnungsart gegeben sind. Ansonsten wird immer der nach der ersten Berechnungsart ermittelte Verzögerungs- oder Beschleunigungswert $a_{filt}$ verwendet.

**Patentansprüche**

1. Verfahren zur Bestimmung einer Fahrzeugverzögerung oder -beschleunigung aus den Einzelradumfangsgeschwindigkeiten eines mit elektronischer Bremsdruckregelung ausgestatteten Fahrzeugs, **dadurch gekennzeichnet, daß** die Fahrzeugverzögerung oder -beschleunigung in einer ersten Berechnungsart anhand der Einzelradverzögerungen ausgewählter Räder erfolgt, welche sich weder in einer Bremsschlupf- oder Antriebsschlupfregelung befinden, noch eine überhöhte Verzögerung, Beschleunigung oder Umfangsgeschwindigkeit aufweisen, wobei aus den Einzelradumfangsgeschwindigkeiten Einzelradverzögerungen oder -beschleunigungen errechnet werden, welche in die Berechnung der Fahrzeugverzögerung einfließen und die Auswahl **dadurch** erfolgt, dass die einzelnen Räder daraufhin untersucht werden, ob sie einer Bremsschlupf- oder Antriebsschlupfregelung unterliegen.

2. Verfahren nach Anspruch 1, **dadurch gekennzeichnet, daß** die Einzelradverzögerungen oder -beschleunigungen zunächst zeitlich gefiltert werden, bevor sie in die Berechnung der Fahrzeugverzögerung oder -beschleunigung einfließen.

3. Verfahren nach Anspruch 1 oder 2, **dadurch gekennzeichnet, daß** die Fahrzeugverzögerung oder -beschleunigung durch eine Zeitfilterung ermittelt wird:

$$a_{filt\ n} = \frac{(k-1)^* a_{filt\ n-1} + \dfrac{\sum\limits_{i=1}^{m} a_{Rad\ filt\ i}}{m}}{k}$$

mit

k = Filterkonstante,
n = laufende Nummer der aktuellen Rechenschleife,
m = Zahl der ausgewählten Räder und
$a_{filt}$ = gefilterte Fahrzeugverzögerung oder -beschleunigung.

4. Verfahren nach einem der vorhergehenden Ansprüche, **dadurch gekennzeichnet, daß** höchstens dann, wenn kein Rad ausgewählt ist, solche Räder hilfsweise ausgewählt werden, deren Einzelradverzögerungen oder -beschleunigungen höchstens um einen bestimmten Betrag von der zuletzt ermittelten Fahrzeugverzögerung oder -beschleunigung abweichen.

5. Verfahren nach Anspruch 4, **dadurch gekennzeichnet, daß** nur solche Räder hilfsweise ausgewählt werden, die sich nicht in einer Bremsdruckhalte- oder -abbauphase befinden.

**6.** Verfahren nach einem der vorhergehenden Ansprüche, **dadurch gekennzeichnet, daß** parallel zur ersten Berechnungsart eine zweite Berechnungsart zur Fahrzeugverzögerung oder -beschleunigung zumindest immer dann durchgeführt wird, wenn alle Räder einer Bremsdruckregelung unterzogen sind und wenn die Beträge einzelner Radverzögerungen oder -beschleunigungen bestimmte Werte überschreiten, wobei zu bestimmten Zeitpunkten ein Rad ausgewählt wird, welches ein Wertepaar aus Umfangsgeschwindigkeit $v_i$ und Zeitpunkt $t_i$ liefert, wobei eine Gradientenbildung nach der Formel

$$grad_{akt} = \frac{v_i - v_j}{t_i - t_j}$$

erfolgt, in der $grad_{akt}$ der aktuelle Gradient der Umfangsgeschwindigkeit ist.

**7.** Verfahren nach Anspruch 6, **dadurch gekennzeichnet, daß** als erster Wert der nach der zweiten Berechnungsart berechneten Fahrzeugverzögerung oder -beschleunigung ein Mittelwert aus der nach der ersten Berechnungsart und dem gebildeten Gradienten angenommen wird.

**8.** Verfahren nach Anspruch 6 oder 7, **dadurch gekennzeichnet, daß** zumindest der zweite und jeder weitere nach der zweiten Berechnungsart ermittelte Wert der Fahrzeugverzögerung oder -beschleunigung aus einer zeitlichen Filterung mit zuvor nach der zweiten Berechnungsart ermittelten Fahrzeugverzögerungen oder -beschleunigungen ermittelten Werten hervorgeht.

**9.** Verfahren nach einem der Ansprüche 6 bis 8, **dadurch gekennzeichnet, daß** zur Gradientenbildung solche Zeitpunkte bestimmt werden, an denen der Betrag des aktuellen Gradienten $grad_{akt}$ für bestimmte Zeit ein Maximum aufweist.

**10.** Verfahren nach Anspruch 9, **dadurch gekennzeichnet, daß** zur Bildung des maximalen Gradienten nur solche Zeitpunkte bestimmt werden, an denen die Differenz zwischen dem aktuellen Gradienten und dem Maximum des Gradienten nach Ablauf der bestimmten Zeit kleiner ist als -0,4g.

**11.** Verfahren nach einem der Ansprüche 6 bis 10, **dadurch gekennzeichnet, daß** die bestimmten Zeitpunkte mindestens um eine bestimmte Zeitspanne beabstandet sind.

**12.** Verfahren nach einem der vorhergehenden Ansprüche, **dadurch gekennzeichnet, daß** wenn sich keine Räder finden, die die Auswahlkriterien oder die hilfsweisen Auswahlkriterien für die erste Berechnungsart erfüllen, der zuletzt nach der ersten Berechnungsart ermittelte Wert der Fahrzeugverzögerung oder -beschleunigung beibehalten wird.

**Claims**

**1.** Method of determining vehicle deceleration or acceleration from the single wheel circumferential speeds of a vehicle equipped with an electronic braking pressure control system,
**characterized in that** the vehicle deceleration or acceleration is determined in a first type of calculation by way of the single wheel decelerations of selected wheels which neither undergo brake slip or traction slip control operations nor exhibit excessive deceleration, acceleration or circumferential speed, wherein single wheel decelerations or accelerations are calculated from the single wheel circumferential speeds and are included in the calculation of the vehicle deceleration, and the selection is made by checking the individual wheels with regard to whether they undergo brake slip or traction slip operations.

**2.** Method as claimed in claim 1,
**characterized in that** the single wheel decelerations or accelerations initially undergo a time filtering operation prior to being included in the calculation of the vehicle deceleration or acceleration.

**3.** Method as claimed in claim 1 or 2,
**characterized in that** the vehicle deceleration or acceleration is determined in a time filtering operation:

$$a_{\text{filt } n} = \frac{(k-1) * a_{\text{filt } n-1} + \dfrac{\sum\limits_{i=1}^{m} a_{\text{Rad filt } i}}{m}}{30}$$

and

  k is the filter constant,
  n is the consecutive number of the current calculation loop,
  m is the number of the selected wheels, and
  $a_{\text{filt}}$ is the filtered vehicle deceleration or acceleration.

**4.** Method as claimed in any one of the preceding claims, **characterized in that** at most in the case that no wheel is chosen, those wheels are selected as an auxiliary means which exhibit single wheel decelerations or accelerations that differ from the last determined vehicle deceleration or acceleration at most by a determined amount.

**5.** Method as claimed in claim 4, **characterized in that** only those wheels are selected as an auxiliary means which are not in a phase where the brake pressure is maintained constant or reduced.

**6.** Method as claimed in any one of the preceding claims, **characterized in that**, in parallel to the first type of calculation, a second type of calculation for determining the vehicle deceleration or acceleration is performed at least whenever all the wheels undergo brake pressure control and the amounts of single wheel decelerations or accelerations exceed defined values, and a wheel is selected at defined points of time which supplies a pair of values made up of the circumferential speed $v_i$ and the point of time $t_i$, and a gradient is produced pursuant the formula

$$\text{grad}_{\text{akt}} = \frac{v_i - v_j}{t_i - t_j}$$

where $\text{grad}_{\text{akt}}$ is the current gradient of the circumferential speed.

**7.** Method as claimed in claim 6, **characterized in that** as a first value of the vehicle deceleration or acceleration calculated pursuant the second type of calculation, a mean value pursuant the first type of calculation and the gradient produced is adopted.

**8.** Method as claimed in claim 6 or 7, **characterized in that** at least the second and each further value of the vehicle deceleration or acceleration determined pursuant the second type of calculation originates from a time filtering operation of the values of the vehicle decelerations or accelerations previously determined pursuant the second type of calculation.

**9.** Method as claimed in any one of claims 6 to 8, **characterized in that** for the production of gradients those points of time are determined where the amount of the current gradient $\text{grad}_{\text{akt}}$ exhibits a maximum for a defined period.

**10.** Method as claimed in claim 9, **characterized in that** for the production of the maximum gradient only those points of time are determined where the difference between the current gradient and the maximum of the gradient is less than -0.4g after expiry of the defined period.

**11.** Method as claimed in any one of claims 6 to 10, **characterized in that** the defined points of time are spaced from one another by at least a defined period.

**12.** Method as claimed in any one of the preceding claims,
**characterized in that** in the absence of wheels satisfying the selection criteria or the auxiliary selection criteria for the first type of calculation, the last value of vehicle deceleration or acceleration determined pursuant the first type of calculation is maintained.

## Revendications

**1.** Procédé pour déterminer un ralentissement ou une accélération d'un véhicule à partir des vitesses périphériques individuelles des roues d'un véhicule équipé d'une régulation électronique de la pression de freinage, **caractérisé en ce que** le ralentissement ou l'accélération du véhicule s'effectue en un premier mode de calcul à l'aide des ralentissements individuels de roues sélectionnées qui ni ne se trouvent dans une régulation du glissement de freinage ou du glissement d'entraînement ni ne présentent un ralentissement, une accélération ou une vitesse périphérique exagérés, où à partir des vitesses périphériques individuelles des roues sont calculés des ralentissements ou des accélérations individuels des roues qui entrent dans le calcul du ralentissement du véhicule, et la sélection s'effectue **en ce que** les différentes roues sont examinées pour savoir si elles sont soumises à une régulation du glissement de freinage ou du glissement d'entraînement.

**2.** Procédé selon la revendication 1, **caractérisé en ce que** les ralentissements ou accélérations individuels des roues sont d'abord filtrés dans le temps avant d'entrer dans le calcul du ralentissement ou de l'accélération du véhicule.

**3.** Procédé selon la revendication 1 ou 2, **caractérisé en ce que** le ralentissement ou l'accélération du véhicule est déterminé par un filtrage temporel :

$$a_{filt\,n} = \frac{(k-1)^* a_{filt\,n-1} + \dfrac{\sum\limits_{i+1}^{m} a_{Rad\,filt\,i}}{m}}{k}$$

où

k        = constante de filtrage,

n        = numéro d'ordre de la boucle de calcul actuelle,

m        = nombre de roues sélectionnées et

$a_{filt}$     = ralentissement ou accélération filtrée du véhicule.

**4.** Procédé selon l'une des revendications précédentes, **caractérisé en ce qu'**au plus lorsqu'aucune roue n'est sélectionnée, on sélectionne accessoirement les roues dont les ralentissements ou accélérations individuels s'écartent au plus d'une valeur déterminée du ralentissement ou de l'accélération du véhicule déterminée en dernier.

**5.** Procédé selon la revendication 4, **caractérisé en ce qu'**on ne sélectionne accessoirement que les roues qui ne se trouvent pas dans une phase de maintien ou de réduction de la pression de freinage.

**6.** Procédé selon l'une des revendications précédentes, **caractérisé en ce que** parallèlement au premier mode de calcul on exécute un deuxième mode de calcul du ralentissement ou de l'accélération du véhicule au moins toujours lorsque toutes les roues sont soumises à une régulation de la pression de freinage et lorsque les valeurs individuelles des ralentissements ou accélérations des roues dépassent des valeurs déterminées, où à des instants déterminés est sélectionnée une roue qui fournit une paire de valeurs, constituée de la vitesse périphérique $v_i$ et de l'instant $t_i$, la formation d'un gradient s'effectuant suivant la formule

$$\text{grad}_{\text{akt}} = \frac{v_i - v_j}{t_i - t_j}$$

dans laquelle $\text{grad}_{\text{akt}}$ est le gradient actuel de la vitesse périphérique.

7. Procédé selon la revendication 6, **caractérisé en ce qu'**on pose comme première valeur du ralentissement ou de l'accélération du véhicule, calculée suivant le deuxième mode de calcul, une valeur moyenne entre celle du premier mode de calcul et le gradient formé.

8. Procédé selon la revendication 6 ou 7, **caractérisé en ce qu'**au moins la deuxième valeur et toute autre valeur déterminée suivant le deuxième mode de calcul du ralentissement ou de l'accélération du véhicule, résultent d'un filtrage temporel avec des valeurs des ralentissements ou des accélérations du véhicule déterminées au préalable suivant le deuxième mode de calcul.

9. Procédé selon l'une des revendications 6 à 8, **caractérisé en ce que** pour la formation du gradient on détermine les instants auxquels la valeur du gradient actuel $\text{grad}_{\text{akt}}$ présente un maximum pendant un temps déterminé.

10. Procédé selon la revendication 9, **caractérisé en ce que** pour former le gradient maximal on ne détermine que les instants auxquels la différence entre le gradient actuel et le maximum du gradient est inférieure à -0,4 g à l'expiration du temps déterminé.

11. Procédé selon l'une des revendications 6 à 10, **caractérisé en ce que** les instants déterminés sont espacés d'au moins un intervalle de temps déterminé.

12. Procédé selon l'une des revendications précédentes, **caractérisé en ce que** dans le cas où l'on ne trouve aucune roue qui satisfasse aux critères de sélection ou aux critères accessoires de sélection pour le premier mode de calcul, on conserve la dernière valeur du ralentissement ou de l'accélération du véhicule déterminée suivant le premier mode de calcul.